Europäisches Patentamt

European Patent Office

Office européen des brevets

(19)

(11) Veröffentlichungsnummer: **0 077 766**
**B1**

(12) # EUROPÄISCHE PATENTSCHRIFT

(45) Veröffentlichungstag der Patentschrift:
**19.03.86**

(51) Int. Cl.⁴: **B 23 G 1/04**

(21) Anmeldenummer: **82890111.6**

(22) Anmeldetag: **03.08.82**

(54) Antriebsanordnung für die Vorschub- und Gewindeschneidbewegung des Werkzeugschlittens von Drehmaschinen.

(30) Priorität: **11.09.81 AT 3926/81**

(43) Veröffentlichungstag der Anmeldung:
**27.04.83 Patentblatt 83/17**

(45) Bekanntmachung des Hinweises auf die Patenterteilung:
**19.03.86 Patentblatt 86/12**

(84) Benannte Vertragsstaaten:
**CH DE FR GB IT LI**

(56) Entgegenhaltungen:
**DE - A - 1 477 852**
**DE - A - 2 732 241**
**DE - B - 1 063 875**
**DE - B - 1 141 509**
**DE - B - 1 196 025**
**FR - A - 1 361 191**
**FR - A - 2 323 916**

(73) Patentinhaber: **VOEST-ALPINE Aktiengesellschaft, Werksgelände, A-4010 Linz (AT)**

(72) Erfinder: **Schönauer, Alois, Westbahnstrasse 120, A-4300 St.Valentin (AT)**

(74) Vertreter: **Hübscher, Gerhard, Dipl.-Ing. et al, Patentanwälte Dipl.-Ing. Gerhard Hübscher Dipl.-Ing. Helmut Hübscher Dipl.-Ing. Heiner Hübscher Spittelwiese 7, A-4020 Linz (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

## Beschreibung

Die Erfindung bezieht sich suf eine Antriebsanordnung für die Vorschub- und Gewindeschneidbewegung des Werkzeugschlittens von Drehmaschinen, mit einem vom aus Hauptmotor, Wendekupplungen und Hauptgetriebe bestehenden Hauptantrieb abgeleiteten Nebenantrieb, der Vorschubgetriebe, Vorschubkupplungen, Zug- und Leitspindel, Schloßkastengetriebe, Schloßkastenmutter u. dgl. umfaßt, wobei im Kraftfluß des Nebenantriebes eine Überlastkupplung liegt, die in gleichmäßig am Umfang verteilte Rasten eingreifende, gegen Federkraft ausrückbare Mitnehmer aufweist und beim Ausrücken einen Endschalter betätigt.

Nebenantriebe für Drehmaschinen gibt es prinzipiell in zwei Arten, und zwar einerseits mit auf der feststehenden Leitspindel sitzen der umlaufender Schloßkastenmutter, die über das Schloßkasten-getriebe von der Zugspindel aus angetrieben wird, wobei das Schloßkastengetriebe schaltbare Kupplungen für Vorwärts- und Rückwärtsfahrt in Längs- und Plandrehrichtung aufweist, und anderseits mit drehender Leitspindel und im Schloßkasten feststehender Mutter, wobei sich dann das Getriebe für die Leitspindel und die Vorschubkupplungen im Vorschubgetriebekasten befinden. Bei beiden Arten ist in den Kraftfluß des Nebenantriebes eine Überlastkupplung zwischengeschaltet, die das übertragbare Drehmoment begrenzt und entweder im Schloßkastengetriebe oder im Vorschubgetriebe eingebaut ist. Diese Überlastkupplungen sind immer formschlüssige Kupplungen verschiedenster Konstruktion und wirken mittels federbelasteter Mitnehmer, beispielsweise Rollen- oder Kugelkörper, die in entsprechend geformte Rasten eingreifen und bei Überschreitung eines bestimmten Grenzmomentes gegen die Kraft der Feder aus den Rasten herausgedrückt werden, wodurch der Formschluß verlorengeht und die Kupplung gelöst ist. Tritt kein Überlastmoment mehr auf, d.h. wird das Grenzmoment wieder unterschritten, kann die Feder die Mitnehmer in die nächstfolgende Raate eindrücken und der Formschluß ist wieder hergestellt. Als weitere Überlastsicherung ist es bereits bekannt, der Überlastkupplung einen Endschalter zuzuordnen, der durch das Auftreten einer Überlast also bei Lösen bzw. Durchdrehen der Überlastkupplung, anspricht und die jeweils gerade eingerückte Vorschubkupplung auarückt. Mit diesem Endschalter ist es nun möglich, beim Längs- und Plandrehen mit dem Werkzeugschlitten einfach gegen einen Anschlag zu fahren, um ein bestimmtes Maß einzuhalten, da ja in diesem Fall der Vorschub automatisch abgeschaltet wird. Beim Gewindeschneiden, das mehrere Durchgänge erfordert, besteht diese Möglichkeit allerdings nicht, da die formschlüssige Verbindung zwischen Haupt- und Nebenantrieb zwischen den einzelnen Durchgängen nicht unterbrochen werden darf, was aber durch das Lösen einer Vorschubkupplunggeschehenwürde. Außerdem verursacht bisher das Ausrücken der Überlastkupplung durch ein Anschlagfahren ein Wandern der Mitnehmer dieser Überlastkupplung von der einen Raste, mit der sie gerade im Eingriff waren, zu irgendeiner anderen, wodurch ein Fehler in der Koordinstion von Haupt- und Nebenantrieb entstünde. Bisher ist es demnach notwendig, beim Gewindeschneiden nach jedem Durchgang den Vorschubantrieb im richtigen Augenblick von Hand sus abzuschalten, das Drehmesser auszurücken, mit dem gesamten Antriebszug rückwärts zu fahren und das Messer wieder entsprechend zuzustellen, bevor der nächste Schnitt begonnen werden kann, was nicht nur schwierig, sondern auch zeitraubend ist.

Der Erfindung liegt daher die Aufgabe zugrunde, diese Mängel zu beseitigen und eine Antriebsanordnung der eingangs geschilderten Art zu schaffen, die es ermöglicht, vor allem auch beim Gewindeschneiden gegen Anschläge zu fahren und dennoch beim folgenden Durchgang ein phasenrichtiges Abtragen des nächsten Spanes zu gewährleisten.

Die Erfindung löst diese Aufgabe dadurch, daß die Betätigung des Endschalters eine Drehrichtungsumkehr des Hauptantriebes bewirkt und die Rastenteilung der Überlastkupplung größer ist als die Länge des durch die Mitnehmer vom Ausrücken bis zur erfolgen Drehrichtungsumkehr beschriebenen Bogens. Das Auftreten eines Überlastmomentes verursacht also kein Lösen der Vorschubkupplungen und daher auch keine Unterbrechung des Antriebszuges im Bereich des Nebenantriebes, sondern es kommt zu einer Drehrichtungsumkehr des gesamten Antriebszuges, so daß ohne Zeitverlust auf Rückwärtslauf geschaltet wird. Dieser Reversiervorgang bringt dann auch die beim Lösen der Überlastkupplung aus den Rasten ausgedrückten und gegenüber diesen Rasten verdrehten Mitnehmer wieder in die ursprünglichen Rasten zurück, wodurch in der Überlastkupplung zwar eine Unterbrechung des Antriebes stattfindet, aber durch die entsprechende Abstimmung der Rastenteilung auf den Verdrehwinkel bei der Drehrichtungsumkehr garantiert ist, daß die beiden Kupplungshälften in ihre ursprüngliche Winkellage relativ zueinander zurückkehren und die Antriebskoppelung nach der Drehrichtungsumkehr genau der vor der Drehrichtungsumkehr entspricht. Wie die Drehrichtungsumkehr erreicht wird, ob durch Schalten der Wendekupplung der Hauptgetriebes oder durch Umschalten des Hauptmotors selbst, ist ohne Bedeutung, wichtig ist nur, daß beim Auslösen des Endschalters ein Reversieren von Haupt- und Nebenantrieb erfolgt und dafür gesorgt ist, daß sich die Teile der Überlastkupplung nach dem Reversiervorgang wieder in ihrer gegenseitigen Ausgangswinkellage befinden.

Die Werkzeugschlittenbewegung kann daher auch beim Gewindeschneiden durch Anschläge begrenzt sein. Erreicht nämlich der Werkzeugschlitten den spindelstockseitigen Anschlag, spricht die Überlastkupplung an, die Mitnehmer werden aus den Rasten ausgerückt und verschieben den ihnen zugeordneten federbelasteten Kupplungsteil. Dieser als Schaltglied ausgebildete Kupplungsteil betätigt den Endschalter, wodurch noch bevor die Mitnehmer in die nächste Raste einrasten können, eine Drehrichtungsumkehr des Hauptantriebes erfolgt. Durch diese Rückdrehung kehren die Mitnehmer wieder in diejenigen Rasten zurück, die sie beim Ausrücken verlassen haben. Gleichzeitig mit der Drehrichtungsumkehr wird von Hand aus oder automatisch das Drehmesser zurückgezogen und der Werkzeugschlitten fährt bis zum reitstockseitigen Anschlag zurück. Auch hier kommt es beim Anfahren wieder zu einer Bewegungsumkehr, wobei das Messer von Hand aus oder automatisch für den nächsten Durchgang entsprechend zugestellt wird. Ist eine Automatik für das Zustellen und Zurückziehen des Drehmessers vorhanden, erfolgt die Gewindeherstellung in mehreren Durchgängen ohne Zutun eines Drehers.

Ist erfindungsgemäß die Vorspannung der die Mitnehmer der Überlastkupplung belastenden Feder einstellbar, was konstruktiv auf einfache Weise erreicht werden kann, läßt sich die Überlastkupplung an verschiedene Arbeitsvorgänge anpassen und ein Ansprech- bzw. Grenzmoment wählen, das nie größer als tatsächlich erforderlich ist. Da beim Gewindeschneiden beispielsweise dieses Ansprechmoment meist wesentlich kleiner ist als üblich, kann also mit einer entsprechenden Einstellung der Kupplungsfeder eine Schonung des gesamten Vorschubantriebes erreicht werden.

Selbstverständlich ist es möglich, den erfindungs-gemäßen Endschalter für ein anschlagbegrenztes Gewindeschneiden allein oder auch zusammen mit einem bekannten Endschalter für ein anschlagbegrenztes Längs- oder Plandrehen einzusetzen. Zweckmäßig ist es aber, wenn nach einer Weiterbildung der Erfindung ein Wahlschalter vorgesehen ist, der den Endschalter entweder den Vorschubkupplungen oder dem Hauptantrieb zuordnet, wodurch mit einem einzigen Endschalter je nach Wahlschalterstellung entweder ein Längs- und Plandrehen oder ein Gewindeschneiden durchgeführt werden kann.

In der Zeichnung ist der Erfindungsgegenstand beispielsweise dargestellt, und zwar zeigen

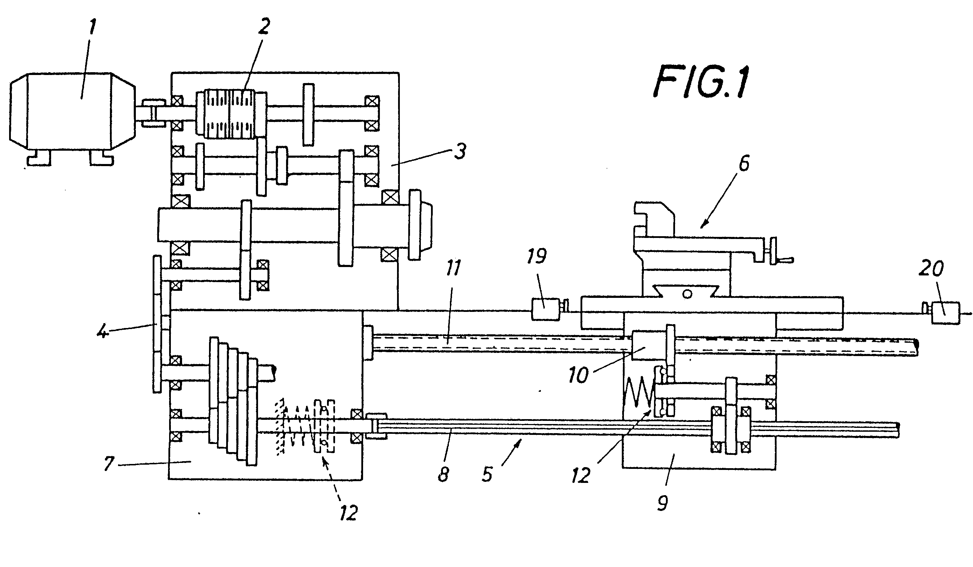

Fig. 1 eine erfindungsgemäße Antriebsanordnung im Schema,

Fig. 2 einen Teil des Schloßkastengetriebes mit Überlastkupplung dieser Antriebsanordnung im Schnitt größeren Maßstabes,

Fig. 3 einen Schnitt nach der Linie III-III der Fig. 2 und die

Fig. 4 und 5 zwei verschiedene Schaltschemata für eine erfindungsgemäße Antriebsanordnung.

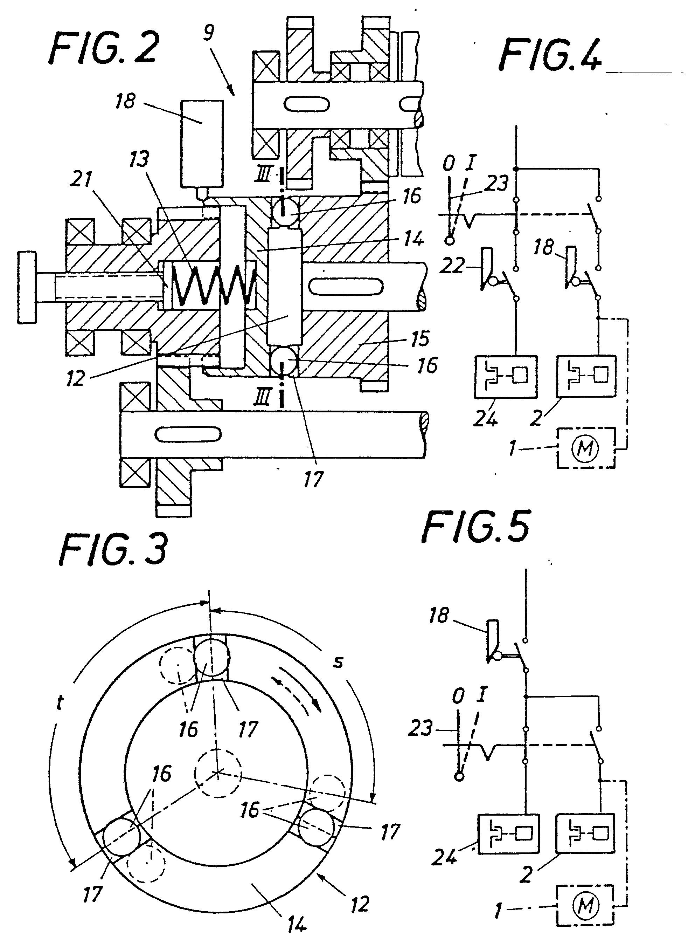

Ein vom Hauptantrieb aus Hauptmotor 1, Wendekupplungen 2 und Hauptgetriebe 3 über Wechselräder 4 abgeleiteter Nebenantrieb 5 für die Vorschub- und Gewindeschneidbewegung des Werkzeugschlittens 6 einer nicht weiter dargestellten Drehmaschine umfaßt ein Vorschubgetriebe 7, eine Zugspindel 8, ein Schloßkastengetriebe 9 und eine mittels der Zugspindel 8 und dem Schloßkasten-getriebe 9 antreibbare Schloßkastenmutter 10, die mit der feststehenden Leitspindel 11 zusammenwirkt. An einer beliebigen Stelle im Kraftfluß des Nebenantriebes 5, beispielsweise im Vorschubgetriebe 7 oder direkt im Schloßkasten 9, sitzt eine Überlastkupplung 12, die zwischen einem axial verschiebbaren, durch eine Kupplungsfeder 13 belasteten Antriebsteil 14 und einem unverschiebbaren Abtriebsteil 15 Mitnehmer 16 aufweist, die in von An- und Abtriebsteil 14, 15 gebildeten Rasten 17 formschlüssig eingreifen. Bei Überlast werden die Mitnehmer 16 gegen die Kraft der Feder 13 aus den Rasten 17 ausgerückt, wodurch sich der Antriebsteil 14 axial verschiebt, der Formschluß verlorengeht und die Kupplung geöffnet wird bzw. es zu einer Relativverdrehung zwischen An- und Abtriebsteil 14, 15 und Mitnehmern 16 kommt. Durch die Axialverschiebung des Antriebsteils 14 der Überlastkupplung 12 wird außerdem ein Endschalter 18 betätigt, der durch Umschalten des Hauptmotors 1 oder durch Schalten der Wendekupplungen 2 die Drehrichtung des Hauptantriebes umkehrt. Dadurch erfolgt auch wieder eine Rückdrehung des Nebenantriebes 5 und auch An- und Abtriebsteil 14, 15 kehren wieder in ihre Ausgangsdrehstellung zurück. Da, wie in Fig. 3 angedeutet, die Teilung t der Kupplungsrasten 17 so bemessen ist, daß bei der Relativverdrehung zwischen Antriebs- und Abtriebsteil 14, 15 die Mitnehmer 16 nicht bis zur jeweils nächsten Raste weiterbewegt werden, d.h., daß die Rastteilung t größer ist als die Länge des Bogens s, der von den Mitnehmern 16 nach deren Ausrücken bis zur erfolgten Drehrichtungsumkehr (strichlierte Lage) beschrieben wird, bringt die Drehungsumkehr auch die Mitnehmer 16 wieder in ihre ursprüngliche Rasten 17 zurück.

Die Überlastkupplung 12 zusammen mit dem Endschalter 18 erlaubt nun ein Gewindeschneiden mit anschlagbegrenzter Bewegung des Werkzeugschlittens 6. Fährt nämlich der Werkzeugschlitten 6 beim Gewindeschneiden an einen spindelstockseitigen Anschlag 19, spricht sofort die Überlastkupplung 12 an, die Mitnehmer 16 werden aus den Rasten 17 gedrückt und der Antriebsteil 14 der Überlastkupplung betätigt den Endschalter 18, der für eine Drehrichtungsumkehr des Hauptantriebes sorgt. Die Rückdrehung beginnt bevor die Mitnehmer 16 eine andere als ihre ursprüngliche Raste 17 erreicht haben, so daß alle Mitnehmer wieder in ihre ursprüngliche Rasten zurückgebracht werden und es keine Winkelversetzung zwischen An- und Abtriebsteil 14, 15 der Überlastkupplung durch das Anfahren an den Anschlag 19 gibt. Gleichzeitig mit der Drehrichtungsumkehr wird das nicht weiter dargestellte Drehmesser zurückgezogen und der Schlitten 6 fährt an den reitstockseitigen Anschlag 20 zurück, wo es neuerlich eine Bewegungsumkehr gibt und nach entsprechender Zustellung des Messers der nächste Schnittdurchgang ausgeführt wird. So kann bei entsprechend automatischer Messerzustellung ein Gewinde auch in mehreren Durchgängen exakt und vollkommen automatisch hergestellt werden. Um das Ansprechmoment der Überlastkupplung 12 verändern und an die verschiedenen Arbeitsbedingungen anpsssen zu können, ist die Kupplungsfeder 13 über eine in Fig. 2 nur angedeutete Verstelleinrichtung 21 in ihrer Vorspannung einstellbar, so daß durch die Wshl eines möglichst geringen Ansprechmomentes der gesamte Nebenantrieb geschont werden kann.

Wie im Schaltschema nach Fig. 4 veranschaulicht, können mit der Überlastkupplung 12 sowohl der Endschalter 18 für das anschlagbegrenzte Gewindeschneiden als auch ein Endschalter 22 für ein anschlagbegrenztes Längs- und Plandrehen zusammenwirken. Durch einen Wahlschalter 23 wird dann entweder der Endschalter 22 zum Vorschubdrehen (Schalterstellung 0) oder der Endschalter 18 zum Gewindeschneiden (Schalterstellung I) aktiviert, so daß beim Vorschubdrehen durch das Ausrücken der Überlastkupplung 12 der Endschalter 22 die Vorschubkupplungen 24 betätigt und den Nebenantrieb 5 unterbricht, oder beim Gewindeschneiden durch das Ausrücken der Überlastkupplung 12 der Endschalter 18 entweder die Wendekupplungen 2 des Hauptantriebes schaltet oder direkt den Hauptmotor 1 umschaltet.

Ist,wie im Schaldtschema nach Fig. 5 angedeutet, dem Endschalter 18 ein Wahlschalter 23 nachgeordnet, dann können beide Aufgaben von ein und demselben Endschalter übernommen werden. In der Schalterstellung 0 kommt es nämlich zur Wirkverbindung zwischen Endschalter 18 und Vorschubkupplung 24 und in Schalterstellung I alternativ dazu zur Wirkverbindung zwischen Endschalter 18 und Wendekupplungen 2 oder Hauptmotor 1.

**Patentansprüche**

1. Antriebsanordnung für die Vorschub- und Gewindeschneidbewegung des Werkzeugschlittens (6) von Drehmaschinen, mit einem vom aus Hauptmotor (1), Wendekupplungen (2) und Hauptgetriebe (3) bestehenden Hauptantrieb abgeleiteten Nebenantrieb (5), der Vorschubgetriebe (7), Vorschubkupplungen, Zug- und Leitspindel (8, 11) Schloßkastengetriebe (9), Schloßkasten-mutter (10) u. dgl. umfaßt, wobei im Kraftfluß des Nebenantriebes (5) eine Überlastkupplung (12) liegt, die in gleichmäßig am Umfang verteilte Rasten (17) eingreifende, gegen Federkraft ausrückbare Mitnehmer (16) aufweist und beim Ausrücken einen Endschalter (18) betätigt, dadurch gekennzeichnet, daß die Betätigung des Endschalters (18) eine Drehrichtungsumkehr des Hauptantriebes (1, 2, 3) bewirkt und die Rastenteilung (t) der Überlastkupplung (12) größer ist als die Länge des durch die Mitnehmer (16) vom Ausrücken bis zur erfolgten Drehrichtungsumkehr beschriebenen Bogens (s).

2. Antriebsanordnung nach Anspruch 1, dadurch gekennzeichnet, daß die Vorspannung der die Mitnehmer (16) der Überlastkupplung (12) belastenden Feder (13) einstellbar ist.

3. Antriebsanordnung nach Anspruch 1 oder 2, dadurch gekennzeichnet, daß ein Wahlschalter (23) vorgesehen ist, der den Endschalter (18) entweder den Vorschubkupplungen (24) oder dem Hauptantrieb (1, 2, 3) zuordnet.

**Claims**

1. Driving means for imparting fead and threadcutting movements to a carriage (8) of a lathe, comprising main drive means consisting of a main motor (1), reversing gears (2) and a main transmission (3), also comprising auxiliary drive means (5), which is driven by the main drive means and includes feed transmissions (7), feed couplings, a feed screw (8), a leat screw (8, 11), an apron gear (9), a clasp nut (10) and the like and includes in its force-transmitting path an overload clutch (12), which includes coupling elements (16), which extend into regularly peripherally distributed notches (17) and are disengageable against spring force, wherein a limit switch (18) is provided, which is actuated by said overload clutch as it is disangaged, characterized in that the actuation of the limit switch (18) effects a reversal of the main drive means (1, 2, 3) and the pitch (t) of the notches of the overload clutch (12) exceeds the length (s) of the arc that io described by the coupling elements (16) from their disengagement until the reuersal has been effected.

2. Driving means according to claim 1, charactarized in that the initial stress of the spring (13) which biases the coupling elements (16) of the overload clutch (12) is adjustable.

3. Driving means according to claim 1 or 2, characterized in that a selector switch (23) is provided for associating the limit switch (18) either with the fead clutches (24) or with the main drive means (1, 2, 3).

## Revendications

1. Dispositif d'entraînement pour le mouvement d'avance et de filetage du chariot porte-outil (6) de tours, avec un entraînement (5) secondaire qui comprend un engrenage d'avance (7), des accouplements d'avance, une broche de chariotage et une vis-mère (8, 11), un engrenage d'écrou embrayable (9), un écrou embrayable (10) de vis-mère et similaires et est dérive d'un entraînement principal composé d'un moteur (1) principal, d'accouplements réversibles (2) et d'un engrenage (3) principal, tandis qu'un accouplement de surcharge (12) monté dans la chaîne cinematique de l'entraînement (5) secondaire présente des doigts d'entraînement (16) venant en prise dans des encoches (17) uniformément reparties sur la périphérie et pouvant en être désengagés en surmontant une force de ressort et actionne au désengagement un commutateur (18) de fin de course, caractérisé par le fait que l'actionnement du commutateur (18) de fin de course provoque un renversement du sens de rotation de l'entraînement (1,2,3) principal et que le pas (t) des encoches de l'accouplement de surcharge (12) est plus grand que la longueur de l'arc (s) décrit par les doigts d'entraînement (16) depuis le désengagement jusqu'au renversement du sens de la rotation.

2. Dispositif d'entraînement selon la revendication 1, caractérisé par le fait que la précontrainte du ressort (13) agissant sur les doigts d'entrainement (16) de l'accouplement de surcharge (12) est réglable.

3. Dispositif d'entraînement selon la revendication 1 ou 2, caractérisé par le fait qu'il est prévu un sélecteur (23) qui associe le commutateur (18) de fin de course soit aux accouplements d'avance (24), soit à l'entraînement (1, 2, 3) principal.

1/2

**FIG.1**

# FIG. 2

*9*

*18*

*13*

*21*

*III*

*16*

*14*

*15*

*16*

*12*

*17*

# FIG. 3

*t*

*s*

*16*  *17*

*16*

*16*

*17*

*17*

*12*

*14*

# FIG. 4

*0*  *I*  *23*

*22*

*18*

*24*  *2*

*1*  Ⓜ

# FIG. 5

*18*

*0*  *I*

*23*

*24*  *2*

*1*  Ⓜ